# EUROPEAN PATENT SPECIFICATION

(11) **EP 1 074 949 B1**
(45) Date of publication and mention of the grant of the patent: **04.06.2003**
(21) Application number: 99306179.5
(22) Date of filing: 03.08.1999
(51) Int. Cl.: G07C 9/00, G06K 9/00

(54) **Integrated circuit board with fingerprint verification capability**
Karte mit integriertem Schaltkreis und der Fähigkeit zur Prüfung von Fingerabdrücken
Carte de circuit intégré à capacité de vérification d'empreintes digitales

(43) Date of publication of application: 07.02.2001
(73) Proprietor: Shen, Ming-Shiang, Tou-Nan Chen, Yunlin Hsien (TW)
(72) Inventor: Shen, Ming-Shiang, Tou-Nan Chen, Yunlin Hsien (TW)
(74) Representative: Carpenter, David

(56) References cited:
- WO-A-82/03286
- WO-A-94/25938
- DE-A- 19 648 767
- FR-A- 2 764 410
- GB-A- 2 181 582
- US-A- 4 577 345
- US-A- 5 054 090
- PATENT ABSTRACTS OF JAPAN vol. 1999, no. 05, 31 May 1999 (1999-05-31) & JP 11 039483 A (NIPPON TELEGR &TELEPH CORP <NTT>), 12 February 1999 (1999-02-12)

## Description

This invention relates to a method of conducting a card transaction using an integrated circuit card, more particularly an integrated circuit card with fingerprint verification capability.

At present, people have no need to carry a lot of cash when making purchases, but instead use plastic currencies, such as a credit card, a bank card and so on, such purchases being within a class of transactions referred to herein as card transactions. Because of the convenience of plastic currencies, it is not uncommon for one to have at least one plastic currency and other cards, such as an identification card and a pass card. When the cards are misplaced or stolen, the owner of the cards must take the risk of misappropriation of the cards.

Therefore, an object of the present invention is to provide a method of conducting card transactions using an integrated circuit card with fingerprint verification capability which can reduce the risks involved when the card is stolen or misplaced and which enhances convenience and security when making network transactions.

The general concept of security involving a fingerprint recognition card or the like is disclosed in, for example, GB-A-2181582 and PATENT ABSTRACTS OF JAPAN Vol. 1999 No. 05 and JP11039483. The present invention seeks to provide enhanced security over the basic systems in the above disclosures.

According to the present invention, there is provided a method of conducting a card based transaction, utilising an integrated circuit card adapted to be accessed by a card reader capable of establishing a communications link with a host computer, said integrated circuit card comprising a card body, a memory device mounted on said card body for storing fingerprint reference data obtained by scanning a fingerprint of an assigned user, and for storing card information therein; a fingerprint sensor mounted on said card body and adapted to scan a fingerprint of a holder of said card body and to generate fingerprint scan data; a card reader interface circuit mounted on said card body and capable of being activated so as to communicate with the card reader, and a processing unit mounted on said card body and connected to said memory device, said fingerprint sensor and said card reader interface circuit, said processing unit receiving the fingerprint scan data from said fingerprint sensor, the method including, comparing, in the said processing unit, the fingerprint scan data with the fingerprint reference data in said memory device to verify if the holder of said card body is the assigned user, said processing unit activating said card reader interface circuit for exchanging the card information with the host computer via the card reader upon verifying that the holder of said card body is the assigned user, said fingerprint reference data including a plurality of scan line data, each of which describes fingerprint characteristics in a respective scanning line of the fingerprint of the assigned user and, the method being characterised by transmitting a segment of the fingerprint reference data stored in said memory device to the host computer upon verifying that the holder of the card body is the assigned user, the segment of the fingerprint reference data including chosen ones of the scan line data selected according to one of the date and the time of the exchange of the card information with the host computer.

Subsidiary aspects of the invention are identified in Claims 2 to 12 appended hereto. Other features and advantages of the present invention will become apparent in the following detailed description of the preferred embodiment with reference to the accompanying drawings, of which:
Fig. 1 is a schematic electrical circuit block diagram illustrating the preferred embodiment of an integrated circuit card according to this invention;
Fig. 2 is a schematic view of a fingerprint scanning area of a fingerprint sensor.

Fig. 3 is a scan line data diagram illustrating a first scanning line (I) in a column direction of Fig. 2;
Fig. 4 is a scan line data diagram illustrating a second scanning line (II) in the column direction of Fig. 2; and
Fig. 5 is a scan line data diagram illustrating a first scanning line (IV) in a row direction of Fig. 2.

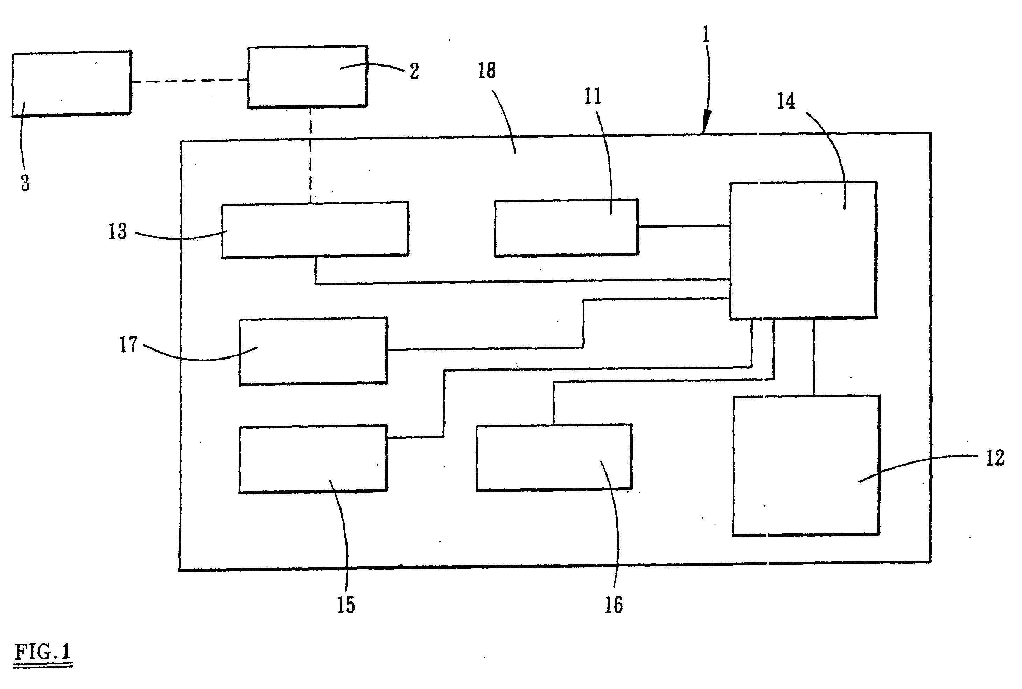

Referring to Fig. 1, according to the preferred embodiment of this invention, an integrated circuit card 1 is shown to be accessed by a card reader 2 that is capable of establishing a communications link with a host computer 3. The card reader 2 is usually disposed at a public place, such as a shop or a department store, and the host computer 3 is installed at a bank, credit card center and so on. The integrated circuit card 1 includes a card body 18, a memory device 11 mounted on the card body 18, a fingerprint sensor 12 mounted on the card body 18, a card reader interface circuit 13 mounted on the card body 18, a processing unit 14 mounted on the card body 18, a battery 15 mounted on the card body 18, a function key set 16 mounted on the card body 18, and a display unit 17 mounted on the card body 18.

In the present embodiment, the memory device 11 is a flash memory. The memory device 11 stores fingerprint reference data obtained by scanning a fingerprint of an assigned user, and card information, such as a credit card number, a bank account number and an assigned user identification card number, therein for transmission to the host computer 3 at an appropriate time . The fingerprint reference data includes a plurality of scan line data, each of which describes fingerprint characteristics in a respective scanning line of the fingerprint of the assigned user.

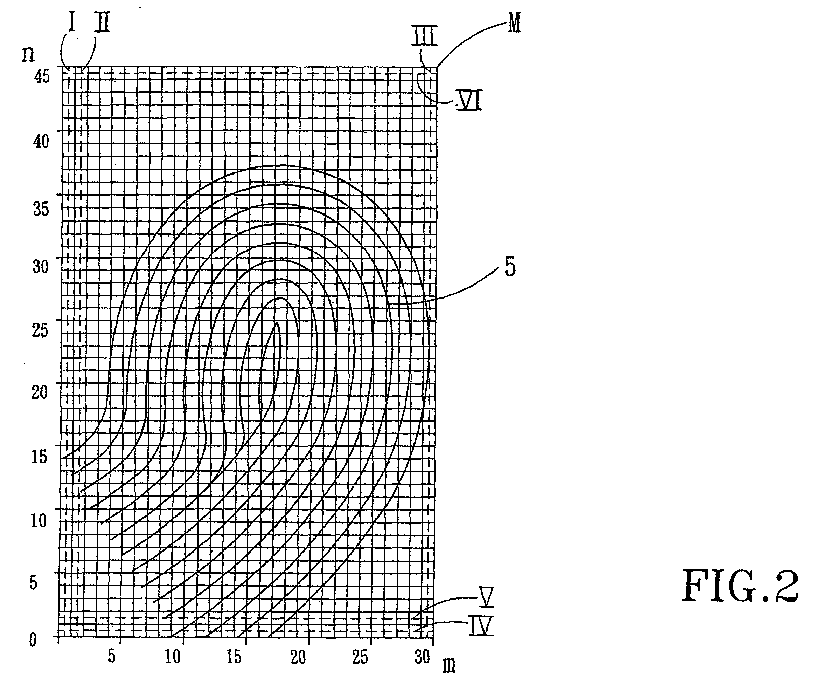

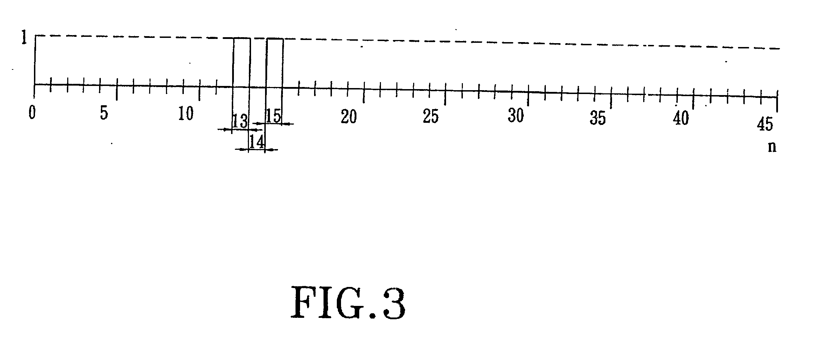

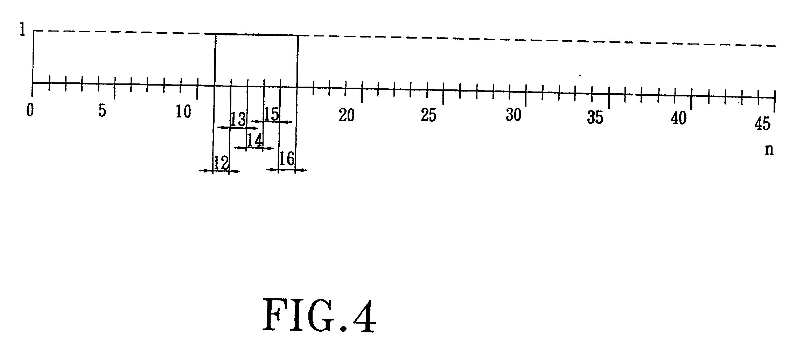

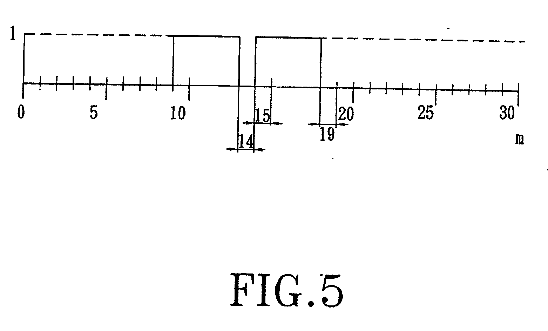

The fingerprint sensor 12 is adapted to scan a fingerprint 5 of a holder of the card body 18 and to generate fingerprint scan data. Referring to Fig. 2, the fingerprint sensor 12 includes an m x n array of scan cells that defines a fingerprint scanning area (M). The fingerprint scan data includes a plurality of scan line data obtained by scanning corresponding lines of the array of scan cells. The lines of the array of scan cells can be scanned in a column direction or a row direction of the array. For example, if m=30, n=45, a first scanning line (I) in the column direction is (1 ' n ; n=1∼45) , a second scanning line ( II ) in the column direction is (2 ' n ; n=1∼45), and a thirtieth scanning line (III), the last scanning line in the column direction, is (30 ' n ; n=1∼45). A first scanning line (IV) in the row direction is (m ' 1 ; m=1∼30), a second scanning line (V) in the row direction is (m ' 2 ;m=1∼30) , and a forty-fifth scanning line, the last scanning line in the row direction, is (m ' 45 ; m=1∼30). Each of the scan cells generates a high logic signal upon detection of a ridge in the fingerprint 5 of the holder of the card body 18, and a low logic signal upon detection of a valley in the fingerprint 5 of the holder of the card body 18. In Fig. 3, the scan cells (1 ' 13), (1 ' 15) generate a high logic signal, respectively, and the other scan cells generate a lower logic signal when the fingerprint sensor 12 scans the first scanning line (I) in the column direction. Fig. 4 illustrates the scan line data obtained by scanning the second scanning line (II) in the column direction. Fig. 5 illustrates the scan line data obtained by scanning the first scanning line (IV) in the row direction. In view of the unique features of fingerprints, if the card holder is different from the assigned user, the fingerprint scan data will differ from the fingerprint reference data.

The card reader interface circuit 13 is activable so as to communicate with the card reader 2.

The processing unit 14 is connected to the memory device 11, the fingerprint sensor 12 and the card reader interface circuit 13. The processing unit 14 receives the fingerprint scan data from the fingerprint sensor 12, and compares the fingerprint scan data with the fingerprint reference data in the memory device 11 to verify if the holder of the card body 18 is the assigned user. The processing unit 14 activates the card reader interface circuit 13 for exchanging the card information with the host computer 3 via the card reader 2 upon verifying that the holder of the card body 18 is the assigned user. Thus, the integrated circuit card cannot be used if the card holder is not the assigned user.

The battery 15 is connected to the processing unit 14 and provides electrical power required by the integrated circuit card 1.

The function key set 16 is connected to the processing unit 14, and is operable so as to select the card information that is exchanged with the host computer 3. For example, when the function key set 16 is selected in a credit card mode, the card information exchanged with the host computer 3 includes the credit card number.A segment of the fingerprint reference data stored in the memory device 11 is transmitted by the processing unit 14 to the host computer 3 upon verifying that the holder of the card body 18 is the assigned user for increased security of network transaction. The segment of the fingerprint reference data includes chosen ones of the scan line data selected according to date or time of the exchange of the card information with the host computer 3. Alternatively, the chosen ones of the scan line data can be selected in a random manner.

In one example, each scan line data of the fingerprint reference data is numbered, such that the scan line data of an even scanning line in the column direction of the fingerprint scanning area (M) is designated by a number "0", the scan line data of an odd scanning line in the column direction of the fingerprint scanning area (M) is designated by a number "1", the scan line data of an even scanning line in the row direction of the fingerprint scanning area (M) is designated by a number "2", and the scan line data of an odd scanning line in the row direction of the fingerprint scanning area (M) is designated by a number "3". When the selected condition is a time of 2:30, a segment of the fingerprint reference data corresponding to the scan line data of the numbers 2, 3, 0 is accessed by the card reader 2 and is transmitted to the host computer 3 in the 0-2-3-0 sequence. The host computer 3 compares the segment of the fingerprint reference data with the fingerprint reference data stored in the host computer 3 at the selected time condition. In another example, when the selected condition is a time and a date of 4:33 5/3/1999, a segment of the fingerprint reference data corresponding to the scan line data of the numbers 0,1, 3, 4, 9, 5 is accessed by the card reader 2 and is transmitted to the host computer 3 in the 1-9-9-9-0-5-0-3-0-4-3-3 sequence. Dynamic changing of the segment of the fingerprint reference data ensures that transaction conducted with the use of the integrated circuit card 1 is valid when a particular condition is met, e.g. 4:33 5/3/1999. In other words, when unauthorized copying of the card information transmitted by the integrated circuit card 1 at a particular time and date occurred, use of the card information at another time and date will result in an invalid transaction that will be rejected by the host computer 3.

The display unit 17 is connected to and is controlled by the processing unit 14 for displaying the card information that is exchanged with the host computer 3 thereon. The display unit 17 can be further used to display information from the host computer 3, such as transacted amount, account balance, etc.

The integrated circuit card 1 of this invention has the following advantages:
1. Since the integrated circuit card 1 compares fingerprint scan data obtained by scanning a fingerprint of a holder of the card 1 with the fingerprint reference data in the memory device 11 to verify if the holder is the assigned user, the integrated circuit card 1 can only be used by the assigned user so as to reduce the risks involved when the integrated circuit card 1 is stolen or misplaced.
2. The card information exchanged with the host computer 3 can vary dynamically since the integrated circuit card 1 further transmits a segment of the fingerprint reference data that is selected according to time and date conditions, thereby further enhancing security when making network transactions.
3. Since the integrated circuit card 1 can be used as a bank card, an identification card or a credit card, the user only needs to bring along one card to accomplish different tasks, thereby resulting in added convenience.

## Claims

1. A method of conducting a card based transaction, utilising an integrated circuit card (1) adapted to be accessed by a card reader (2) capable of establishing a communications link with a host computer (3), said integrated circuit card (1) comprising:
a card body (18);
a memory device (11), mounted on said card body (18), for storing fingerprint reference data obtained by scanning a fingerprint of an assigned user, and for storing card information therein;
a fingerprint sensor (12) mounted on said card body (18) and adapted to scan a fingerprint of a holder of said card body (18) and to generate fingerprint scan data;
a card reader interface circuit (13) mounted on said card body (18) and capable of being activated so as to communicate with the card reader (2); and
a processing unit (14) mounted on said card body (18) and connected to said memory device (11), said fingerprint sensor (12) and said card reader interface circuit (13), said processing unit (14) receiving the fingerprint scan data from said fingerprint sensor (12), the method including, comparing, in the said processing unit, the fingerprint scan data with the fingerprint reference data in said memory device (11) to verify if the holder of said card body (18) is the assigned user, said processing unit (14) activating said card reader interface circuit (13) for exchanging the card information with the host computer (3) via the card reader (2) upon verifying that the holder of said card body (18) is the assigned user, said fingerprint reference data including a plurality of scan line data, each of which describes fingerprint characteristics in a respective scanning line of the fingerprint of the assigned user and, the method being **characterised by** transmitting a segment of the fingerprint reference data stored in said memory device to the host computer upon verifying that the holder of the card body is the assigned user, the segment of the fingerprint reference data including chosen ones of the scan line data selected according to one of the date and the time of the exchange of the card information with the host computer.

2. A method as claimed in claim 1, further **characterized in that** said fingerprint sensor (12) of said integrated circuit card includes an m x n array of scan cells that defines a fingerprint scanning area (M).

3. A method as claimed in Claim 2, further **characterized in that** said fingerprint scan data includes a plurality of scan line data obtained by scanning corresponding lines of said array of scan cells.

4. A method as claimed in Claim 3, further **characterized in that** the lines of said array of scan cells are scanned in a row direction of said array.

5. A method as claimed in Claim 3, further **characterized in that** the lines of said array of scan cells are scanned in a column direction of said array.

6. A method as claimed in Claim 2, further **characterized in that** each of said scan cells generates a first logic signal upon detection of a ridge in the fingerprint of the holder of said card body (18), and a second logic signal upon detection of a valley in the fingerprint of the holder of said card body (18).

7. A method as claimed in any one of Claims 1 to 6, further **characterized in that** the card includes a function key set (16) mounted on said card body (18) and connected to said processing unit (14), said function key set (16) being operable in use to select the card information that is exchanged with the host computer (3).

8. A method as claimed in any one of Claims to 7, further **characterized in that** the card includes, a display unit (17) mounted on said card body (18) and connected to and controlled by said processing unit (14) for displaying the card information that is exchanged with the host computer (3).

9. A method as claimed in any one of Claims 1 to 8, further **characterized in that** the card information that is exchanged with the host computer (3) includes a credit card number.

10. A method as claimed in any one of Claims 1 to 8, further **characterized in that** the card information that is exchanged with the host computer (3) includes a bank account number.

11. A method as claimed in any one of Claims 1 to 8, further **characterized in that** the card information that is exchanged with the host computer (3) includes an assigned user identification card number.

12. A method as claimed in any one of Claims 1 to 11, further **characterized in that** said memory device (11) is a flash memory.

## Patentansprüche

1. Verfahren zur Durchführung einer Kartentransaktion unter Verwendung einer Karte mit integriertem Schaltkreis (1), die für einen Zugriff durch einen Kartenleser (2) geeignet ist, der eine Übertragungsverbindung mit einem Host-Computer (3) herstellen kann, wobei die Karte mit integriertem Schaltkreis (1) umfaßt:
einen Kartenkörper (18);
ein Speicherbauelement (11), das an dem Kartenkörper (18) angeordnet ist, zum Speichern von Fingerabdruckreferenzdaten, die durch Abtasten eines Fingerabdrucks eines zugeordneten Benutzers gewonnen werden, und zum Speichern von Karteninformation in diesem;
einen Fingerabdrucksensor (12), der an dem Kartenkörper (18) angeordnet ist und geeignet ist, einen Fingerabdruck eines Inhabers des Kartenkörpers (18) abzutasten und Fingerabdruck-Abtastdaten zu erzeugen;
eine Kartenleser-Schnittstellenschaltung (13), die an dem Kartenkörper (18) angeordnet ist und aktiviert werden kann, um mit dem Kartenleser (2) in Verbindung zu treten;
eine Verarbeitungseinheit (14), die an dem Kartenkörper (18) angeordnet ist und die mit dem Speicherbauelement (11), dem Fingerabdrucksensor (12) und der Kartenleser-Schnittstellenschaltung (13) verbunden ist, wobei die Verarbeitungseinheit (14) die Fingerabdruck-Abtastdaten von dem Fingerabdrucksensor (12) empfängt, wobei das Verfahren den Schritt aufweist: in der Verarbeitungseinheit erfolgendes Vergleichen der Fingerabdruck-Abtastdaten mit den Fingerabdruckreferenzdaten in dem Speicherbauelement (11), um zu überprüfen, ob der Inhaber des Kartenkörpers (18) der zugeordnete Benutzer ist, wobei die Verarbeitungseinheit (14) nach der Bestätigung, daß der Inhaber des Kartenkörpers (18) der zugeordnete Benutzer ist, die Kartenleser-Schnittstellenschaltung (13) für einen Austausch der Karteninformation mit dem Host-Computer (3) über den Kartenleser (2) aktiviert, wobei die Fingerabdruckreferenzdaten eine Vielzahl von Abtastliniendaten aufweisen, die alle jeweils Fingerabdruckmerkmale in einer entsprechenden Abtastlinie des Fingerabdrucks des zugeordneten Benutzers beschreiben, und wobei das Verfahren **dadurch gekennzeichnet ist, daß** ein Segment der Fingerabdruckreferenzdaten, die im Speicherbauelement gespeichert sind, nach der Bestätigung, daß der Inhaber des Kartenkörpers der zugeordnete Benutzer ist, an den Host-Computer übertragen wird, wobei das Segment der Fingerabdruckreferenzdaten ausgewählte Daten der Abtastliniendaten aufweist, die entsprechend dem Datum und/oder der Zeit des Austauschs der Karteninformation mit dem Host-Computer gewählt werden.

2. Verfahren nach Anspruch 1, ferner **dadurch gekennzeichnet, daß** der Fingerabdrucksensor (12) der Karte mit integriertem Schaltkreis eine m-mal-n-Matrix von Rasterelementen aufweist, die einen Fingerabdruck-Rasterbereich (M) definiert.

3. Verfahren nach Anspruch 2, ferner **dadurch gekennzeichnet, daß** die Fingerabdruck-Abtastdaten eine Vielzahl von Abtastliniendaten aufweisen, die durch Abtasten entsprechender Linien der Matrix von Rasterelementen gewonnen werden.

4. Verfahren nach Anspruch 3, ferner **dadurch gekennzeichnet, daß** die Linien der Matrix von Rasterelementen in einer Zeilenrichtung der Matrix abgetastet werden.

5. Verfahren nach Anspruch 3, ferner **dadurch gekennzeichnet, daß** die Linien der Matrix von Rasterelementen in einer Spaltenrichtung der Matrix abgetastet werden.

6. Verfahren nach Anspruch 2, ferner **dadurch gekennzeichnet, daß** jedes der Rasterelemente nach Erkennung einer Leiste im Fingerabdruck des Inhabers des Kartenkörpers ein erstes logisches Signal und nach Erkennung einer Rille im Fingerabdruck des Inhabers des Kartenkörpers (18) ein zweites logisches Signal erzeugt.

7. Verfahren nach Anspruch 1 oder 6, ferner **dadurch gekennzeichnet, daß** die Karte einen Funktionstastensatz (16) aufweist, der an dem Kartenkörper (18) angeordnet ist und der mit der Verarbeitungseinheit (14) verbunden ist, wobei der Funktionstastensatz (16) bei Benutzung betriebsfähig ist, um die Karteninformation zu wählen, die mit dem Host-Computer (3) ausgetauscht wird.

8. Verfahren nach einem der Ansprüche 1 bis 7, ferner **dadurch gekennzeichnet, daß** die Karte eine Anzeigeeinheit (17) aufweist, die an dem Kartenkörper (18) angeordnet ist und die mit der Verarbeitungseinheit (14) verbunden ist und von dieser gesteuert wird, zum Anzeigen der Karteninformation, die mit dem Host-Computer (3) ausgetauscht wird.

9. Verfahren nach einem der Ansprüche 1 bis 8, ferner **dadurch gekennzeichnet, daß** die Karteninformation, die mit dem Host-Computer (3) ausgetauscht wird, eine Kreditkartennummer aufweist.

10. Verfahren nach einem der Ansprüche 1 bis 8, ferner **dadurch gekennzeichnet, daß** die Karteninformation, die mit dem Host-Computer (3) ausgetauscht wird, eine Bankkontonummer aufweist.

11. Verfahren nach einem der Ansprüche 1 bis 8, femer **dadurch gekennzeichnet, daß** die Karteninformation, die mit dem Host-Computer (3) ausgetauscht wird, eine Kartennummer zur Erkennung eines zugeordneten Benutzers aufweist.

12. Verfahren nach einem der Ansprüche 1 bis 11, ferner **dadurch gekennzeichnet, daß** das Speicherbauelement (11) ein Flash-Speicher ist.

## Revendications

1. Procédé de mise en oeuvre d'une transaction basée sur carte, en utilisant une carte à circuit intégré (1) qui est adaptée pour être accédée par un lecteur de carte (2) permettant d'établir une liaison de communication avec un ordinateur hôte (3), ladite carte à circuit intégré (1) comprenant:
un corps de carte (18);
un dispositif de mémoire (11), qui est monté sur ledit corps de carte (18) pour stocker des données de référence d'empreinte digitale qui sont obtenues en balayant une empreinte digitale d'un utilisateur assigné, pour stocker une information de carte dedans;
un capteur d'empreinte digitale (12) qui est monté sur ledit corps de carte (18) et qui est adapté pour balayer une empreinte digitale d'un détenteur dudit corps de carte (18) et pour générer des données de balayage d'empreinte digitale;
un circuit d'interface de lecteur de carte (13) qui est monté sur ledit corps de carte (18) et qui peut être activé de manière à communiquer avec le lecteur de carte (2); et
une unité de traitement (14) qui est montée sur ledit corps de carte (18) et qui est connectée audit dispositif de mémoire (11), audit capteur d'empreinte digitale (12) et audit circuit d'interface de lecteur de carte (13), ladite unité de traitement (14) recevant les données de balayage d'empreinte digitale en provenance dudit capteur d'empreinte digitale (12), le procédé incluant la comparaison, dans ladite unité de traitement, des données de balayage d'empreinte digitale avec les données de référence d'empreinte digitale dans ledit dispositif de mémoire (11) afin de vérifier si le détenteur dudit corps de carte (18) est l'utilisateur assigné, ladite unité de traitement (14) activant ledit circuit d'interface de lecteur de carte (13) pour échanger l'information de carte avec l'ordinateur hôte (3) via le lecteur de carte (2) suite à une vérification du fait que le détenteur dudit corps de carte (18) est l'utilisateur assigné, lesdites données de référence d'empreinte digitale incluant une pluralité de données de ligne de balayage dont chacune décrit des caractéristiques d'empreinte digitale dans une ligne de balayage respective de l'empreinte digitale de l'utilisateur assigné, et le procédé étant **caractérisé par** la transmission d'un segment des données de référence d'empreinte digitale qui sont stockées dans ledit dispositif de mémoire sur l'ordinateur hôte suite à une vérification du fait que le détenteur du corps de carte est l'utilisateur assigné, le segment des données de référence d'empreinte digitale incluant celles choisies des données de ligne de balayage qui sont sélectionnées conformément à soit la date, soit l'heure de l'échange de l'information de carte avec l'ordinateur hôte.

2. Procédé selon la revendication 1, **caractérisé en outre en ce que** ledit capteur d'empreinte digitale (12) de ladite carte à circuit intégré inclut un réseau de m x n cellules de balayage qui définit une zone de balayage d'empreinte digitale (M).

3. Procédé selon la revendication 2, **caractérisé en outre en ce que** lesdites données de balayage d'empreinte digitale incluent une pluralité de données de ligne de balayage qui sont obtenues en balayant des lignes correspondantes dudit réseau de cellules de balayage.

4. Procédé selon la revendication 3, **caractérisé en outre en ce que** les lignes dudit réseau de cellules de balayage sont balayées suivant une direction de rangée dudit réseau.

5. Procédé selon la revendication 3, **caractérisé en outre en ce que** les lignes dudit réseau de cellules de balayage sont balayées suivant une direction de colonne dudit réseau.

6. Procédé selon la revendication 2, **caractérisé en outre en ce que** chacune desdites cellules de balayage génère un premier signal logique lors de la détection d'un sillon en relief dans l'empreinte digitale du détenteur dudit corps de carte (18) et un second signal logique lors de la détection d'un sillon en creux dans l'empreinte digitale du détenteur dudit corps de carte (18).

7. Procédé selon l'une quelconque des revendications 1 à 6, **caractérisé en outre en ce que** la carte inclut un jeu de touches de fonction (16) qui est monté sur ledit corps de carte (18) et qui est connecté à ladite unité de traitement (14), ledit jeu de touches de fonction (16) pouvant être actionné en utilisation pour sélectionner l'information de carte qui est échangée avec l'ordinateur hôte (3).

8. Procédé selon l'une quelconque des revendications 1 à 7, **caractérisé en outre en ce que** la carte inclut une unité d'affichage (17) qui est montée sur ledit corps de carte (18) et qui est connectée à ladite unité de traitement (14) et commandée par celle-ci pour afficher l'information de carte qui est échangée avec l'ordinateur hôte (3).

9. Procédé selon l'une quelconque des revendications 1 à 8, **caractérisé en outre en ce que** l'information de carte qui est échangée avec l'ordinateur hôte (3) inclut un numéro de carte de crédit.

10. Procédé selon l'une quelconque des revendications 1 à 8, **caractérisé en outre en ce que** l'information de carte qui est échangée avec l'ordinateur hôte (3) inclut un numéro de compte bancaire.

11. Procédé selon l'une quelconque des revendications 1 à 8, **caractérisé en outre en ce que** l'information de carte qui est échangée avec l'ordinateur hôte (3) inclut un numéro de carte d'identification d'utilisateur assigné.

12. Procédé selon l'une quelconque des revendications 1 à 11, **caractérisé en outre en ce que** ledit dispositif de mémoire (11) est une mémoire flash.
